(19) **Europäisches Patentamt**

**European Patent Office**

**Office européen des brevets**

(11) **EP 1 669 913 A1**

(12) **EUROPEAN PATENT APPLICATION**

(43) Date of publication:
14.06.2006 Bulletin 2006/24

(51) Int Cl.:
*G06Q 10/00* (2006.01)

(21) Application number: 04029153.6

(22) Date of filing: 09.12.2004

(84) Designated Contracting States:
**AT BE BG CH CY CZ DE DK EE ES FI FR GB GR**
**HU IE IS IT LI LT LU MC NL PL PT RO SE SI SK TR**
Designated Extension States:
**AL BA HR LV MK YU**

(71) Applicant: **DEUTSCHE BÖRSE AG**
**60487 Frankfurt am Main (DE)**

(72) Inventor: **Brendgen, Stefan**
**60487 Frankfurt am Main (DE)**

(74) Representative: **Grünecker, Kinkeldey,**
**Stockmair & Schwanhäusser**
**Anwaltssozietät**
**Maximilianstrasse 58**
**80538 München (DE)**

(54) **Sensitivity based data processing apparatus and method**

(57)    A data processing technique is provided for processing data structures identifying two resources terminating at different times, a time instance earlier than these termination times, and a numeric data value which is time independent. At this time instance, resource values and resource amounts are determined. For determining the resource amounts, a sensitivity of the respective resource to a predefined parameter is determined, and the numeric data value is divided by the respective sensitivity. The data processing technique may be applied for trading and clearing a futures contract.

Fig.3

## Description

BACKGROUND OF THE INVENTION

### 1. Field of the Invention

The invention generally relates to data processing apparatus and methods, and more particularly to the processing of data structures for determining resource values and amounts. For example, the invention may relate to determining prices and amounts of assets.

### 2. Description of the Related Art

Electronic trading platforms exist which form an automated environment in which securities trading takes place. In such electronic trading platforms, data structures are processed automatically for trading and clearing instruments, and transactions are initiated and processed automatically for the settlement.

WO 03/077061 A2 describes a system and method for performing automatic spread trading. One or more market data feeds that contain market information for tradable objects are received at an exchange. A spread data feed is generated and displayed in a spread window as bid and ask quantities, and the user can enter orders in the spread window.

Another example of spread trades is described in the strategy paper of the Chicago Board of Trade, "CBOT® Treasury Futures: Yield Curve Shifts Make Trading Opportunities", 2003. This paper suggests a yield curve spread trade where the number of contracts is chosen to balance price sensitivities to yield change on each leg of the spread trade.

Thus, sensitivity spreads are known where the value of a number of assets is calculated as a function of a set of parameters. Certain trading strategies in such assets are based on their price sensitivity with respect to changes in one of the price determining parameters. Usually, these strategies are set up in a way to benefit from anticipated changes in the term structure of such parameters.

To give an example, these parameters may be yields of 5-year bonds and 10-year bonds. Long and short positions may then be taken in the assets driven by these parameters, e.g., BOBL and BUND futures. The sizing of long and short positions in these assets may then be chosen to be inversely proportional to any single asset's sensitivity to the strategy's base parameters to ensure an overall zero sensitivity to (small) parallel shifts of the parameters' term structure.

For example, a simple yield curve trade may consist of two oppositely directed transactions in two futures contracts representing different points on the yield curve. For instance, FITE denotes buying 5-year notes versus selling 10-year notes, and NOB denotes buying 10-year notes versus selling 30-year bonds.

In order to set up trades in a way that a parallel shift of the yield curve will have (substantially) zero impact, duration weighted positions in the long and short sides of the trade are created in the above-mentioned yield curve spread trades and similar strategies. These techniques make use of different sensitivities of different contracts against interest rate shifts (the longer the more sensitive), e.g., by buying 3 contracts of a 5-year future versus selling 2 contracts of a 10-year future, so that the total profit on one product compensates for the loss on the other product, if both short and long term yields change by the same amount.

While the above-described techniques allow for compensating for parallel shifts of yield curves, a number of disadvantages exist. For instance, there is a significant legging risk of getting only one side of the transaction executed in the market, resulting in an unintended directional exposure. Further, the components' sensitivities may continuously change in response to market moves, so that the positions need to be continuously readjusted. This may lead to significant maintenance problems. Further, sizing problems may occur due to the relatively large notional value in standard futures contracts. This may result in an insufficient precision of the long/short ratio, and can thus yield a residual directional exposure which may be of some significance.

Similar problems may occur in technical fields other than the above-described financial trading. For instance, multiprocessor systems may lead to similar disadvantages. If in such systems a computer program may run on more than one processor, and each processor is allocated for a specific time, the processors may be differently engaged in performing the computer program. This engagement (e.g., the processor load) may further vary with time. In addition, there may be an access scheme that schedules individual computer tasks to be performed by individual processors to an extent that depends on the (maximum) time for which the processor is allocated. In such multiprocessor systems, parallel shifts in the term structure of the scheduling scheme may be compensated for by taking into account sensitivities which indicate how strong the processor load depends on the allocation time dependent scheduling. However, the above-described disadvantages apply to such multiprocessor systems as well.

A further example is the use of automated stock houses. Such depots may have different compartments that are booked for different time durations. At any time, each compartment is filled up to a time dependent level. As store house compartments which are booked for a longer time may be preferred over compartments booked for a shorter time, there may be a booking time dependent prioritization scheme that influences the individual filling states. Parallel shifts in the term structure of the prioritization scheme may be compensated for by taking into account the sensitivities of the filling states to variations in the prioritization scheme. However, automated stock houses suffer from the same disadvantages as described above.

SUMMARY OF THE INVENTION

It is therefore the object of the invention to provide a technique that may allow for using the sensitivity approach without leading to legging risks, without requiring position readjustments, and without leading to insufficient precision due to sizing problems.

This object is solved by the invention as claimed in the independent claims.

Preferred embodiments are described in the dependent claims.

In one embodiment, a data processing apparatus for processing data structures having first, second, third and fourth data fields is provided. The first data field identifies a first resource terminating at a first termination time, and the second data field identifies a second resource terminating at a second termination time which is different from the first termination time. The third data field specifies a time instance earlier than the first and second termination times. The fourth data field holds a numeric data value. Each of the first and second resources have associated an individual time dependent resource value, and the numeric data value held in the fourth data field is time independent. The apparatus comprises a resource value determination unit for determining a resource value of the first resource and a resource value of the second resource at the time instance specified by the third data field. The apparatus further comprises a resource amount determination unit for determining an amount of the first resource and an amount of the second resource. The resource amount determination unit is adapted to determine a sensitivity of the respective resource to a predefined parameter. The value of the predefined parameter influences the resource value of the respective resource. The resource amount determination unit is further adapted to calculate the amounts by dividing the numeric data value held in the fourth data field by the determined sensitivity of the respective resource.

In another embodiment, there is provided a computer-implemented method of processing a data structure having first, second, third and fourth data fields. The first data field identifies a first resource terminating at a first termination time. The second data field identifies a second resource terminating at a second termination time which is different from the first termination time. The third data field specifies a time instance earlier than the first and second termination times, and the fourth data field holds a numeric data value. Each of the first and second resources have associated an individual time dependent resource value, and the numeric data value held in the fourth data field is time independent. The method comprises determining a resource value of the first resource and a resource value of the second resource at the time instance specified by the third data field, and determining an amount of the first resource and an amount of the second resource. Determining each resource amount comprises determining a sensitivity of the respective resource to a predefined parameter, and calculating the amounts by dividing the numeric data value held in the fourth data field by the determined sensitivity of the respective resource. The value of the predefined parameter influences the resource value of the respective resource.

In yet another embodiment, a computer-implemented method of creating a data structure is provided where the data structure has first, second, third and fourth data fields. The method comprises storing an identifier identifying a first resource terminating at a first termination time in the first data field, and an identifier identifying a second resource terminating at a second termination time different from the first termination time in the second data field. Each of the first and second resources have associated an individual time dependent resource value. The method further comprises storing a time instance earlier than the first and second termination times in the third data field. Further, the method comprises storing a numeric data value in the fourth data field where the numeric data value is a time independent value suitably chosen to allow determining amounts of the first and second resources at the time instance stored in the third data field by dividing the numeric data value by respective resource sensitivities to a predefined parameter having a value influencing the resource value of the respective resource.

According to a further embodiment, there is provided a computer-implemented method of clearing a futures contract specifying a first asset forming a short position, a second asset forming a long position, an expiration date, and a contract value which remains unchanged until the expiration date. The first and second assets have different maturities. The method comprises determining a price of the first asset and a price of the second asset at the expiration date, and determining an amount of the first asset and an amount of the second asset to be delivered. Determining each asset amount comprises determining a sensitivity of the respective asset to a price determining parameter, and calculating the amount of the respective asset by dividing the contract value by the determined sensitivity of the respective asset.

Still a further embodiment provides a computer-implemented method of trading a futures contract. The method comprises specifying a first asset forming a short position and a second asset forming a long position. The first and second assets have different maturities. The method further comprises specifying an expiration date of the futures contract, and specifying a contract value which remains unchanged until the expiration date. The contract value is suitably chosen to allow determining amounts of the first and second assets at the expiration date by dividing the contract value by respective asset sensitivities to a price determining parameter.

Yet another embodiment relates to a computer system for clearing a futures contract specifying a first asset forming a short position, a second asset forming a long position, an expiration date, and a contract value which remains unchanged until the expiration date. The first and second assets have different maturities. The computer system comprises a price determination unit which is adapted to determine a price of the first asset and a price of the second asset of the expiration date. The computer system further comprises an asset amount determination unit which is adapted to determine an amount of the first asset and an amount of the second asset to be delivered. The asset amount determination unit is adapted to determine a sensitivity of the first asset and a sensitivity of the second asset to a price determining parameter, and calculate each of the amounts by dividing the contract value by the determined sensitivity of the respective asset.

In still another embodiment, a computer-readable storage medium is provided that stores instructions that, when executed by a processor, cause the processor to perform any one of the above-described methods.

## BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:

FIG. 1    is a graph illustrating an example of the term structure of a predefined parameter for use in the embodiments;

FIG. 2    is a block diagram illustrating a data structure which may be created and processed in the embodiments;

FIG. 3    is a block diagram illustrating a data processing apparatus according to an embodiment; and

FIG. 4    is a flow chart illustrating the process of performing data processing according to an embodiment.

## DETAILED DESCRIPTION OF THE INVENTION

The illustrative embodiments of the present invention will be described with reference to the figure drawings wherein like elements and structures are indicated by like reference numbers.

## Main Embodiments

In these embodiments, a futures contract trading and clearing technique is provided that allows for processing futures contract data that specifies two assets forming a short and a long position, respectively, an expiration date, and a fixed contract value. An asset may be any item of property, and may in particular be a bond, a note, a bond future, an option contract, or any other financial instrument including derivative instruments. A short position is a seller's open position in a contract, i.e., the promise to sell a quantity of the respective asset at a particular price in the future. Accordingly, a long position is a buyer's open position in a contract.

In the embodiments, the two assets have different maturities. That is, in one embodiment, the short position asset may have an earlier date of maturity than the long position asset, while in another embodiment, it is the long position asset which has the earlier maturity date.

Thus, a futures contract may be specified by identifying the two assets, defining which one is the short position asset and which is the long position asset, specifying an expiration date of the futures contract, and specifying a contract value which remains unchanged until the expiration date.

As will be described in more detail below, the clearing technique of the embodiments will take into account sensitivities of the respective assets to a price determining parameter. The price determining parameter may be any parameter, the value of which has some influence on the price of the respective asset.

One example of a price determining parameter is the yield of the respective asset. This is because the price of an asset depends on the yield. In another embodiment, the price determining parameter may be the volatility of the respective asset, i.e., the extent of the actual or forecast price fluctuations of the asset. Generally, the volatility of a financial instrument can vary, depending on the period of time on which it is based. In any case, the price of an asset such as an at-the-money option contract may vary dependent on the volatility. An at-the-money option is an option whose exercise price is identical to the price of the underlying instrument.

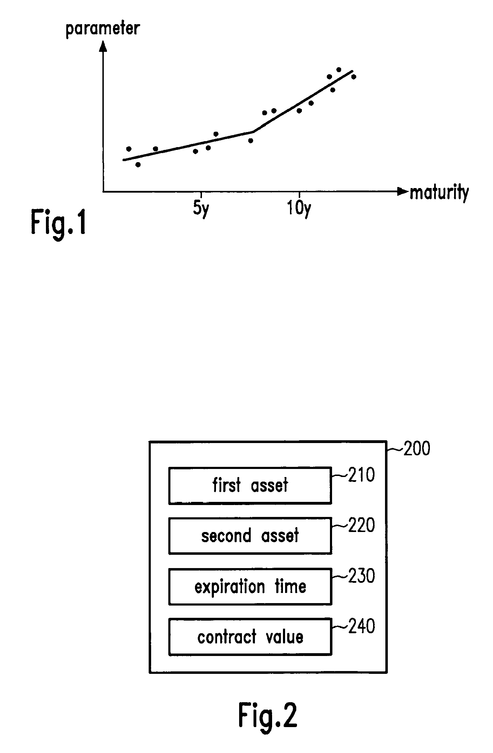

Referring now to FIG. 1, a graphical representation of a dependency of the price determining parameter as a function of the maturity is shown in an example. As can be seen, the price determining parameter may be different for different maturities. In the example of FIG. 1, the price determining parameter for an asset having a 10-year maturity is nearly twice the parameter of an asset having a 5-year maturity. It is to be noted that the curve presented in FIG. 1 is just an example, and any other curve may be used as well. For instance, while the curve is shown in FIG. 1 to lead to higher parameter values with increasing maturity dates, other embodiments exist where the parameters decrease with the maturity dates. Further, the curve may have regions where the slope is positive and other regions where the slope is negative, i.e., there may be maxima and/or minima. Further, there may be regions with no slope so that assets having different maturities may have the same price determining parameter. Further, while FIG. 1 shows that regions of the curve may be interpolated using a linear approximation, non-linear curves may exist as well.

It is to be noted that the parameter-maturity characteristic such as that shown in FIG. 1 may vary with time. That is, while certain assets have certain parameter values at the time of specifying futures contract data according to the embodiments, the parameter values may have changed when the futures contract is cleared. Generally, clearing refers to the offsetting and settlement of transactions resulting from trading. For futures and options clearing in particular, it refers to duties encompassing the daily balancing of profits and losses (variation margin), the daily calculation of collateral requirements (additional margin), and final settlement once the contract has expired.

Before discussing the clearing technique that may be used in the embodiments, FIG. 2 shows an example of a data structure 200 that may be created when specifying the futures contract. As apparent from the figure, the futures contract data structure 200 of the present embodiment may have at least four data fields 210-240. The first data field 210 stores a data item that identifies the first asset, and the second data field 220 stores an identifier specifying the second asset. As described above, the first asset forms a short position and the second asset forms a long position. In another embodiment, it may be the second asset which forms a short position while the first asset forms a long position. In any case, the first and second assets have different maturities, with the maturity date of the first asset being earlier or later than that of the second asset.

The data field 230 stores data identifying the expiration time of the futures contract. The expiration time may indicate any time instance that is not later than the earlier maturity date of the two assets.

Finally, the data field 240 stores a numeric data value indicating the value of the futures contract. As described above, this value remains unchanged until clearing the futures contract.

When clearing the futures contract, prices of the first and second assets are determined at the expiration date. Further, an amount of the first asset and an amount of the second asset to be delivered is determined. This is done by determining sensitivities of the respective assets to the price determining parameter, and calculating the amount of the assets by dividing the contract value by the respective determined sensitivity.

The embodiments provide a technique for clearing futures contracts which are sensitivity spread futures and which are based on the difference of the same price determining parameter for two different assets. This may be the difference of yields of two different bonds, the difference of volatilities of two option contracts with different time to maturity, or a number of other parameters affecting the value of a certain asset by a well defined function.

The value of the futures contract may be defined as a currency amount per unit of the underlying difference, and remains stable until the contract's expiration date. An adjustment of such a position is not necessary even after significant market moves. Also, a position in the futures contract will never carry the least directional exposure.

At expiration, the holder of such a sensitivity spread futures contract will have to make delivery of one of the underlying assets whilst taking delivery of the other one of the underlying assets. Both deliveries will be made at prevailing market prices and the amount to be delivered of each of the two assets is defined by the ratio of the futures contract value and each asset's sensitivity to the underlying parameter.

Taking the example of the price determining parameter being the yield of a bond or bond future, FIG. 1 would then be a yield curve. In this case, the embodiments allow to trade the yield differential of two defined positions on the yield curve. The price P of the futures contract may then be defined as:

$$P = 100\% - y_S + y_L$$

where $y_s$ is the short term yield and $y_L$ is the long term yield.

The tick size may be fixed to, e.g., 1,000$ per basis point. A basis point is the equivalent of 0.01 %. Having the tick size (i.e., the futures contract value) fixed is advantageous since it eliminates the need to adjust the position due to different changes of basis point values on short term and long term bonds.

In the present embodiment, the first and second assets are bond futures, e.g., FTNM and FTNL. These bond futures may have the same expiration date, and this date may further be the same as the futures contract expiration date held in data field 230.

At the expiration of the futures contract, the holder of the long position has to take delivery of the short term bond while making delivery of the long term bond. The prices at which delivery has to occur are derived from the corresponding bond futures' final settlement prices in the same way as if delivery was the result of an expiring bond future. Such bond prices may then be converted into implied yields which allow deriving the sensitivity to yield changes for each bond to be delivered.

The sensitivity to yield changes may be indicated as basis point value. A basis point value indicates the change in value of an asset resulting from one basis point change in yield.

In the present embodiment, the nominal value of either bond position to be delivered is calculated as the ratio of the yield curve future's tick size and the basis point value of the respective bond. That is, the nominal value of the 5-year note may be calculated by dividing the tick size of 1,000$ by the basis point value of the 5-year note. Similarly, the nominal value of the 10-year note is calculated by dividing the tick size value of 1,000$ by the basis point value of the 10-year note. This ensures that the overall cash bond position held after expiration has the same exposure to yield curve shifts as the yield curve futures contract.

To give a numeric example, the 5-year and 10-year U.S. Treasury note futures FTNM and FTNL may be assumed to have the following final settlement prices (assuming that the bond conversion factors are 1): 105-00.0 (=105.0) for FTNM, and 108-16.0 (=108.5) for FTNL.

These prices may imply a yield of 3% and a basis point value of 5/32% (=0.0015625) for FTNM, and a yield of 4% and a basis point value of 10/32% (=0.003125) for FTNL.

Using the above-indicated equation to calculate the futures contract's price, the futures contract will settle at 101.000, because the 10-year yield minus the 5-year yield is 1%.

The nominal value of the 5-year note is then 640,000$, and the nominal value of the 10-year note is 320,000$. These values may be rounded according to the available division of shares if necessary.

It may be seen that such cash market position will create mutually offsetting profits and losses in the event of 5-year and 10-year yields both rising by one basis point. In the event of a change of the curve's steepness (e.g., the 5-year yield is unchanged but the 10-year yield goes one basis point upwards), the market value of the 5-year note will remain unchanged while the price of the 10-year note will decrease from 108-16.0 (=108.5) to 108-06.0 (=108.1875), i.e., by its basis point value of 10/32%. This results in a loss of 10/32% * 320,000$ = 1,000$, which is exactly the tick size value.

As apparent from the above description of the embodiments, a sensitivity spread futures contract may be traded and cleared such that both the holder of the long position and the holder of the short position have to make delivery to each other in two different predefined assets. The nominal amount to be delivered in each asset is defined at expiration on the basis of the different sensitivities to changes in the future's underlying parameter. This requires a specific technical environment to do the respective data processing.

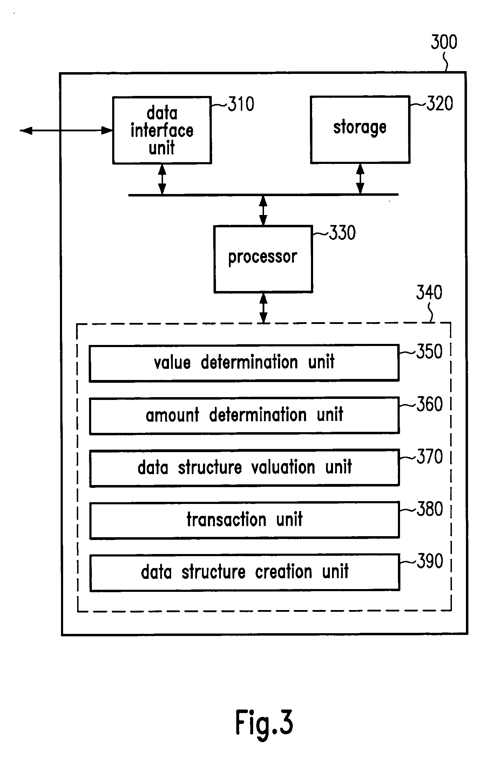

Referring now to FIG. 3, a computer based data processing apparatus 300 is shown that may be used to perform the clearing according to the embodiments. The data processing apparatus 300 has a data interface unit 310 to receive input data such as the futures contract data structure 200 shown in FIG. 2, price information, and data with respect to the price determining parameters such as the yield or volatility. Further, the data interface unit 310 may be arranged to output data such as calculation results, transaction instructions, or the like.

Further, there is provided a data storage 320 for storing incoming data and/or outgoing data. Furthermore, the storage 320 may hold intermediate calculation results as well as computer readable instructions.

As shown in FIG. 3, there is further provided a processor 330 which is coupled to the data interface unit 310 and the storage 320 by means of a data bus. The processor 330 is the unit that performs the actual calculation.

In detail, the processor 330 may perform processes that are shown in FIG. 3 by reference sign 340. The algorithms behind these processes may be software based or hard coded. That is, the units 350-390 may be understood as being software instructions in one embodiment or hardware circuits in another embodiment.

The value determination unit 350 is a unit for determining the prices of the first and second assets at the expiration date.

The amount determination unit 360 determines the asset amounts to be delivered. That is, the amount determination unit 360 determines the sensitivities of the respective assets and divides the contract value by these sensitivities.

The data structure valuation unit 370 is a unit for calculating the price of the futures contract on the basis of the differences in the price determining parameter.

The transaction unit 380 is a unit for initiating and processing transactions for settling the futures contract at the expiration date. That is, the transaction unit 380 initiates and processes two oppositely directed delivery-versus-payment transactions between the counterparts.

The data structure creation unit 390 may be used to create two oppositely directed position in derivative products such as, e.g., at-the-money options. This may be useful, for instance, in a case where it is the volatility of at-the-money options which is used as a price determining parameter.

It is noted that the physical delivery initiated by the transaction unit 380 and the creation of two data structures indicating oppositely directed positions in derivative products as done by the data structure creation unit 390 are alternative approaches for performing the settling. While the embodiment of FIG. 3 indicates that the clearing system can perform both settling mechanisms, embodiments exist where only one of these alternatives is used, i.e., where only one of the transaction unit 380 and the data structure creation unit 390 is present.

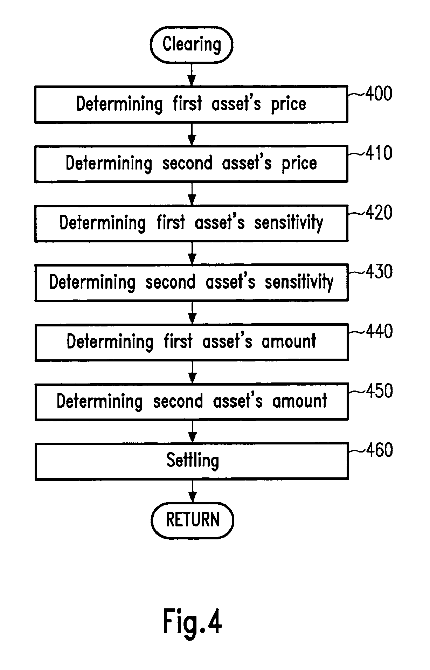

Referring now to FIG. 4, a flow chart is provided illustrating the clearing process according to an embodiment. In steps 400 and 410, the prices of the first and second assets are determined by the value determination unit 350.

Steps 420 and 430 determine the respective sensitivities by the amount determination unit 360. For determining a sensitivity, the amount determination unit 360 may use the current market prices to determine the current yield using an iterative algorithm. The market price is the cash value of the cash flow resulting from this bond. The resulting value may then be increased and/or decreased by one basis point, and the cash value is again determined for the so-changed yield. The basis point value (i.e., the sensitivity for yield curve futures) may then be calculated by averaging the price changes in both cases, i.e., where the yield was increased and decreased.

After having determined the sensitivity of the first and second assets in steps 420 and 430, the amount determination unit 360 determines the respective amounts in steps 440 and 450 by dividing the contract value indicated by the numeric data content of the data field 240 by the determined sensitivity values.

Finally, the contract is settled in step 460 by the transaction unit 380 or the data structure creation unit 390.

Where one or both of the assets is a basket of different securities, the settling step 460 may include a selection function to either one who has to make delivery for the respective basket. This selection function allows the respective holder to choose one or more of the securities for delivery.

The following is a list of preferred embodiments of the invention:

> E1. A computer-implemented method of clearing a futures contract specifying a first asset forming a short position, a second asset forming a long position, an expiration date, and a contract value remaining unchanged until said expiration date, the first and second assets having different maturities, the method comprising:

>> determining a price of the first asset and a price of the second asset at said expiration date; and

>> determining an amount of the first asset and an amount of the second asset to be delivered,

>> wherein determining each asset amount comprises:

>> determining a sensitivity of the respective asset to a price determining parameter; and

>> calculating the amount of the respective asset by dividing said contract value by the determined sensitivity of the respective asset.

> E2. The method of embodiment E1, wherein said assets are bonds or bond futures and said price determining parameter is the yield of the bonds or bond futures.

> E3. The method of embodiment E2, further comprising:

>> determining a price of said futures contract based on the difference between the yield of the first asset and the yield of the second asset.

> E4. The method of embodiment E3, wherein the price of said futures contract is determined to be the sum of 100 percent and said yield difference.

> E5. The method of embodiment E2, wherein said sensitivities are basis point values.

> E6. The method of embodiment E2, wherein said assets are bond futures of the same expiration date as said futures contract.

> E7. The method of embodiment E1, wherein said assets are option contracts and said price determining parameter is the volatility of the option contracts.

> E8. The method of embodiment E1, further comprising:

>> determining a price of said futures contract based on the difference between a value of the price determining parameter for the first asset and a value of the price determining parameter for the second asset.

> E9. The method of embodiment E1, further comprising:

>> using said contract value as tick size for both assets.

> E10. The method of embodiment E1, wherein determining the sensitivity comprises:

>> applying an iterative algorithm to derive a value of the price determining parameter for the respective asset;

>> incrementing and/or decrementing the derived value of the price determining parameter; and

>> evaluating changes in the price of the respective asset due to said incrementing and/or decrementing.

> E11. The method of embodiment E1, wherein determining each asset amount further comprises:

>> rounding the calculated amounts according to the available division of shares.

> E12. The method of embodiment E1, further comprising:

>> variation margining said futures contract.

> E13. The method of embodiment E1, further comprising:

settling the futures contract by initiating and processing two oppositely directed delivery-versus-payment transactions.

E14. The method of embodiment E13, wherein one or both of the first and second assets are baskets of different securities, and settling the futures contract further comprises:

allowing the each respective asset holder to select one or more securities from the respective basket.

E15. The method of embodiment E1, further comprising:

settling the futures contract by creating two oppositely directed positions in derivative products.

E16. The method of embodiment E15, wherein said assets are at-the-money option contracts, said price determining parameter is the volatility of the at-the-money option contracts, and the two oppositely directed positions in derivative products are at-the-money option contracts.

E17. A computer-implemented method of trading a futures contract, the method comprising:

specifying a first asset forming a short position, and a second asset forming a long position, the first and second assets having different maturities;

specifying an expiration date of the futures contract, and

specifying a contract value remaining unchanged until said expiration date, said contract value being suitably chosen to allow determining amounts of the first and second assets at said expiration date by dividing said contract value by respective asset sensitivities to a price determining parameter.

E18. A computer-readable storage medium storing instructions that, when executed by a processor, cause said processor to perform the method of one of embodiments E1 to E17.

E19. A computer system for clearing a futures contract specifying a first asset forming a short position, a second asset forming a long position, an expiration date, and a contract value remaining unchanged until said expiration date, the first and second assets having different maturities, the computer system comprising:

a price determination unit adapted to determine a price of the first asset and a price of the second asset at said expiration date; and

an asset amount determination unit adapted to determine an amount of the first asset and an amount of the second asset to be delivered, said asset amount determination unit being adapted to determine a sensitivity of the first asset and a sensitivity of the second asset to a price determining parameter, and calculate each of said amounts by dividing said contract value by the determined sensitivity of the respective asset.

As apparent from the above description of the embodiments, a data processing technique is provided for processing data structures having fields for identifying resources (i.e., assets) that terminate at given termination times (maturity dates), a time instance (i.e., the expiration date of the contract) that is not later than the earlier one of the two termination times, and a numeric data value (i.e., the contract value). At the specified time instance, a resource value of the first resource and a resource value of the second resource, i.e., the prices of the assets are determined. Further, resource amounts are determined based on the sensitivities of the respective resources to a predefined parameter, the value of which influences the resource values of the respective resources. The resource amounts are then calculated by dividing the numeric data value by the respective determined sensitivity.

Further Embodiments

While the above-described embodiments relate to data structure processing in the field of trading and clearing financial instruments, other technical fields exist in further embodiments. For instance, the data processing according to the embodiments may take place to control an automated stock house. In this case, a data structure would be processed that has data fields identifying different compartments that are booked for different time durations. The data structure would further specify a time instance earlier (or at least not later) than the booking times, and a numeric data value which is time independent.

That is, the stock house compartments are resources which will terminate when the respective booking times have expired. If the time instance specified in the data structure is reached, the filling states of the stock house compartments, i.e., the resource values, are determined. The filling states may depend on a booking time dependent prioritization scheme. That is, this embodiment may use characteristics like those shown in FIG. 1, where priorities are given at the ordinate axis while the end dates of the booking times are given at the abscissa.

An amount of the respective resources, i.e.,

stock house compartments, may then be calculated using the sensitivity of the respective compartment to the priority. This is because the filling state of a compartment depends on the priority of the compartment. For instance, if a compartment has assigned a high priority, incoming goods will most likely be stored in this compartment, and the filling state will increase. Consequently, as compartments having different booking times may be assigned different priorities, the sensitivity with which the filling state depends on the priority will vary from compartment to compartment. That is, compartments having different booking times may have different sensitivities.

By determining resource amounts such that the numeric data value held in the data structure is divided by the respective sensitivity, parallel shifts in the term structure (e.g., FIG. 1) of the priority scheme are compensated for.

It is noted that resource amounts in this embodiment may be any value that can be appropriately assigned to a compartment. For instance, the amount could be a rental value of the respective compartment or a factor indicating the quality of access to transportation mechanisms that can be used to transport the goods to and from the respective compartment.

It is apparent that similar embodiments exist where memory regions in a computer system are used rather than compartments of a stock house.

Further, multiprocessor systems may be used in other embodiments where the resources are individual processors that are allocated for certain different allocation times, and the resource values are the respective processor loads. The processor loads may vary with time. If an access scheme is applied (such as that shown in FIG. 1) where processors of different allocation times are given different access frequencies, the processor loads will depend on this allocation time dependent scheduling. The embodiments then allow for compensating for parallel shifts in this access scheme by processing a data structure that identifies two processors of different allocation times, a time instance, and a time independent numeric data value. If the time instance is reached, the numeric data value is divided by the respective sensitivities of the processor loads to the respective allocated access frequencies. The resource amounts in this context may then be an amount of a memory buffer assigned to the respective processor for storing incoming and outgoing data, or any other suitable quantity that can be assigned to a processor.

While the invention has been described with respect to the physical embodiments constructed in accordance therewith, it will be apparent to those skilled in the art that various modifications, variations and improvements of the present invention may be made in the light of the above teachings and within the purview of the appended claims without departing from the spirit and intended scope of the invention. In addition, those areas in which it is believed that those of ordinary skill in the art are familiar, have not been described herein in order to not unnecessarily obscure the invention described herein. Accordingly, it is to be understood that the invention is not to be limited by the specific illustrative embodiments, but only by the scope of the appended claims.

**Claims**

1. A data processing apparatus for processing data structures (200) having first, second, third and fourth data fields, the first data field (210) identifying a first resource terminating at a first termination time, the second data field (220) identifying a second resource terminating at a second termination time different from the first termination time, the third data field (230) specifying a time instance earlier than said first and second termination times, and the fourth data field (240) holding a numeric data value, wherein each of said first and second resources have associated an individual time dependent resource value, and the numeric data value held in the fourth data field is time independent, the apparatus comprising:

a resource value determination unit (350) for determining a resource value of the first resource and a resource value of the second resource at the time instance specified by the third data field; and
a resource amount determination unit (360) for determining an amount of the first resource and an amount of the second resource, the resource amount determination unit being adapted to determine a sensitivity of the respective resource to a predefined parameter, the value of said predefined parameter influencing the resource value of the respective resource, and calculate said amounts by dividing the numeric data value held in the fourth data field by the determined sensitivity of the respective resource.

2. The apparatus of claim 1, wherein said data structure has associated a data structure value, and the apparatus further comprises:

a data structure value determination unit (370) for determining said data structure value based on the difference between a value of the predefined parameter for the first resource and a value of the predefined parameter for the second resource.

3. The apparatus of claim 1 or 2, wherein each of said first and second resources have further associated an individual resource time instance equal to the time instance specified by the third data field.

4. The apparatus of one of claims 1 to 3, being adapted to use the numeric data value held in the fourth data field as smallest increment of the resource value of the first resource and the resource value of the second resource.

5. The apparatus of one of claims 1 to 4, wherein the resource amount determination unit is adapted to determine the sensitivity by applying an iterative algorithm to derive a value of the predefined parameter for the respective resource, incrementing and/or decrementing the derived value of the predefined parameter, and evaluating changes in the resource value of the respective resource due to said incrementing and/or decrementing.

6. The apparatus of one of claims 1 to 5, wherein the resource amount determination unit is adapted to round the calculated amounts according to available resource portions.

7. The apparatus of one of claims 1 to 6, further comprising:

a transaction unit (380) for initiating and processing a first transaction by supplying the determined amount of the first resource and receiving a compensation based on the determined resource value and amount of the first resource, and initiating and processing a second transaction by receiving the determined amount of the second resource and supplying a compensation based on the determined resource value and amount of the second resource.

8. The apparatus of claim 7, wherein one or both of the first and second resources have associated a plurality of different sub-resources, and the transaction unit is adapted to enable selection of one or more sub-resources from the respective plurality.

9. The apparatus of one of claims 1 to 8, further comprising:

a data structure creation unit (390) for creating a first data structure having a data field identifying the first resource, a data field holding the determined resource value of the first resource, a data field holding the resource amount of the first resource, and a data field specifying a first time instance later than the time instance specified in the third data field of the processed data structure and earlier than said first termination time, and creating a second data structure having a data field identifying the second resource, a data field holding the determined resource value of the second resource, a data field holding the resource amount of the second resource, and a data field specifying a second time instance later than the time instance specified in the third data field of the processed data structure and earlier than said second termination time.

10. The apparatus of claim 9, wherein said first and second time instances are the same.

11. A computer-implemented method of processing a data structure having first, second, third and fourth data fields, the first data field identifying a first resource terminating at a first termination time, the second data field identifying a second resource terminating at a second termination time different from the first termination time, the third data field specifying a time instance earlier than said first and second termination times, and the fourth data field holding a numeric data value, wherein each of said first and second resources have associated an individual time dependent resource value, and the numeric data value held in the fourth data field is time independent, the method comprising:

determining (400, 410) a resource value of the first resource and a resource value of the second resource at the time instance specified by the third data field; and
determining (420-450) an amount of the first resource and an amount of the second resource,

wherein determining each resource amount comprises:

determining (420, 430) a sensitivity of the respective resource to a predefined parameter, the value of said predefined parameter influencing the resource value of the respective resource; and
calculating (440, 450) said amounts by dividing the numeric data value held in the fourth data field by the determined sensitivity of the respective resource.

12. The method of claim 11, wherein said data structure has associated a data structure value, and the method further comprises:

determining said data structure value based on the difference between a value of the predefined parameter for the first resource and a value of the predefined parameter for the second resource.

13. The method of claim 11 or 12, wherein each of said first and second resources have further associated an individual resource time instance equal to the time instance specified by the third data field.

14. The method of one of claims 11 to 13, further comprising:

using the numeric data value held in the fourth data field as smallest increment of the resource value of the first resource and the resource value of the second resource.

15. The method of one of claims 11 to 14, wherein determining the sensitivity comprises:

applying an iterative algorithm to derive a value of the predefined parameter for the respective resource;
incrementing and/or decrementing the derived value of the predefined parameter; and
evaluating changes in the resource value of the respective resource due to said incrementing and/or decrementing.

16. The method of one of claims 11 to 15, wherein determining each resource amount further comprises:

rounding the calculated amounts according to available resource portions.

17. The method of one of claims 11 to 16, further comprising:

initiating and processing (460) a first transaction by supplying the determined amount of the first resource and receiving a compensation based on the determined resource value and amount of the first resource; and
initiating and processing (460) a second transaction by receiving the determined amount of the second resource and supplying a compensation based on the determined resource value and amount of the second resource.

18. The method of claim 17, wherein one or both of the first and second resources have associated a plurality of different sub-resources, and initiating and processing the transactions further comprises:

selecting one or more sub-resources from the respective plurality.

19. The method of one of claims 11 to 18, further comprising:

creating (460) a first data structure having a data field identifying the first resource, a data field holding the determined resource value of the first resource, a data field holding the resource amount of the first resource, and a data field specifying a first time instance later than the time instance specified in the third data field of the processed data structure and earlier than said first termination time; and
creating (460) a second data structure having a data field identifying the second resource, a data field holding the determined resource value of the second resource, a data field holding the resource amount of the second resource, and a data field specifying a second time instance later than the time instance specified in the third data field of the processed data structure and earlier than said second termination time.

20. The method of claim 19, wherein said first and second time instances are the same.

21. A computer-implemented method of creating a data structure having first, second, third and fourth data fields, the method comprising:

storing an identifier identifying a first resource terminating at a first termination time in the first data field, and an identifier identifying a second resource terminating at a second termination time different from the first termination time in the second data field, each of said first and second resources having associated an individual time dependent resource value;
storing a time instance earlier than said first and second termination times in the third data field, and
storing a numeric data value in the fourth data field, the numeric data value being a time independent value suitably chosen to allow determining amounts of the first and second resources at the time instance stored in the third data field by dividing said numeric data value by respective resource sensitivities to a predefined parameter having a value influencing the resource value of the respective resource.

22. A computer-implemented method of clearing a futures contract specifying a first asset forming a short position, a second asset forming a long position, an expiration date, and a contract value remaining unchanged until said expiration date, the first and second assets having different maturities, the method comprising:

determining a price of the first asset and a price of the second asset at said expiration date; and
determining an amount of the first asset and an amount of the second asset to be delivered,

wherein determining each asset amount comprises:

determining a sensitivity of the respective asset to a price determining parameter; and
calculating the amount of the respective asset by dividing said contract value by the determined sensitivity of the respective asset.

23. A computer-implemented method of trading a futures contract, the method comprising:

specifying a first asset forming a short position, and a second asset forming a long position, the first and second assets having different maturities;

specifying an expiration date of the futures contract, and

specifying a contract value remaining unchanged until said expiration date, said contract value being suitably chosen to allow determining amounts of the first and second assets at said expiration date by dividing said contract value by respective asset sensitivities to a price determining parameter.

24. A computer-readable storage medium storing instructions that, when executed by a processor, cause said processor to perform the method of one of claims 11 to 23.

25. A computer system for clearing a futures contract specifying a first asset forming a short position, a second asset forming a long position, an expiration date, and a contract value remaining unchanged until said expiration date, the first and second assets having different maturities, the computer system comprising:

a price determination unit adapted to determine a price of the first asset and a price of the second asset at said expiration date; and

an asset amount determination unit adapted to determine an amount of the first asset and an amount of the second asset to be delivered, said asset amount determination unit being adapted to determine a sensitivity of the first asset and a sensitivity of the second asset to a price determining parameter, and calculate each of said amounts by dividing said contract value by the determined sensitivity of the respective asset.

**Fig.1**

**Fig.2**

300

data interface unit ~310

storage ~320

processor ~330

340

value determination unit ~350

amount determination unit ~360

data structure valuation unit ~370

transaction unit ~380

data structure creation unit ~390

Fig.3

Clearing

| Determining first asset's price | ~400 |
| Determining second asset's price | ~410 |
| Determining first asset's sensitivity | ~420 |
| Determining second asset's sensitivity | ~430 |
| Determining first asset's amount | ~440 |
| Determining second asset's amount | ~450 |
| Settling | ~460 |

RETURN

Fig.4

| European Patent Office | DECLARATION<br>which under Rule 45 of the European Patent Convention shall be considered, for the purposes of subsequent proceedings, as the European search report | Application Number<br>EP 04 02 9153 |
|---|---|---|

| The Search Division considers that the present application, does not comply with the provisions of the EPC to such an extent that it is not possible to carry out a meaningful search into the state of the art on the basis of all claims<br><br>Reason:<br><br>The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br><br>----- | CLASSIFICATION OF THE APPLICATION (Int.Cl.7)<br><br>G06F17/60 |
|---|---|

| Place of search | Date | Examiner |
|---|---|---|
| Munich | 21 March 2005 | Beker, H |

EPO FORM 1504 (P04C37)